# FASCICULE DE BREVET EUROPEEN

(11) **EP 3 362 735 B1**
(45) Date de publication et mention de la délivrance du brevet: **29.05.2019**
(21) Numéro de dépôt: 16785204.5
(22) Date de dépôt: 22.09.2016
(51) Int. Cl.: F17C 13/02, G01L 7/16

(54) **BOUTEILLE DE FLUIDE SOUS PRESSION**
DRUCKFLÜSSIGKEITSZYLINDER
CYLINDER OF PRESSURISED FLUID

(30) Priorité: 15.10.2015 FR 1559792
(43) Date de publication de la demande: 22.08.2018
(73) Titulaire: L'Air Liquide Société Anonyme pour l'Etude et l'Exploitation des Procédés Georges Claude, 75007 Paris (FR)
(72) Inventeur: FRENAL, Antoine, 95460 Ezanville (FR); LIGONESCHE, Renaud, 95220 Herblay (FR)
(74) Mandataire: De Cuenca, Emmanuel Jaime
(86) Numéro de dépôt international: PCT/FR2016/052399
(87) Numéro de publication internationale: WO 2017/064380

(56) Documents cités:
- EP-A1- 2 171 342
- WO-A1-2012/034927
- WO-A1-2013/127895
- FR-A1- 2 429 601
- US-A- 1 731 632
- US-A- 3 222 933
- US-A- 6 137 417
- US-A1- 2005 229 981
- US-A1- 2009 272 443

## Description

La présente invention concerne une bouteille de fluide sous pression.

L'invention concerne plus particulièrement une bouteille de fluide sous pression, notamment de gaz sous pression, comprenant un robinet abritant un circuit de fluide comportant au moins une vanne d'isolation, la bouteille comprenant un dispositif indicateur de pression comprenant au moins un piston sensible à la pression dans la bouteille et mobile relativement au corps du robinet selon le niveau de pression dans la bouteille entre au moins une première position rétractée et une seconde position déployée, le dispositif indicateur de pression comprenant au moins un support d'information mobile destiné à coopérer mécaniquement avec le piston, le support d'information étant déplaçable entre au moins deux positions ou états distincts pour symboliser respectivement au moins deux niveaux de pression selon la position du piston.

Pour indiquer à l'utilisateur d'une bouteille de fluide sous pression l'autonomie restante, il est connu de prévoir un manomètre sur le robinet de la bouteille. Ce manomètre est généralement monté sur un robinet et protégé avec le robinet par un chapeau de protection. Pour être visible par l'utilisateur le manomètre est généralement accessible via une ouverture du chapeau de protection.

Une autre solution connue consiste à prévoir un piston qui fait plus ou moins saillie sur le corps d'un robinet selon la pression auquel il est soumis. Une telle solution est connue de WO2013127895A1.

Dans certaines situations il est cependant souhaitable de pouvoir disposer d'un organe d'affichage d'une information représentative de la quantité de fluide restant dans la bouteille qui soit plus fiable et/ou mieux visible par l'utilisateur, même à une distance de plusieurs mètres de la bouteille.

Un but de la présente invention est de pallier tout ou partie des inconvénients de l'art antérieur relevés ci-dessus ou de proposer un dispositif amélioré par rapport à l'art antérieur.

A cette fin, la bouteille selon l'invention, par ailleurs conforme à la définition générique qu'en donne le préambule ci-dessus, est essentiellement caractérisée en ce que la bouteille est munie d'un chapeau de protection du robinet comprenant une structure rigide délimitant un volume de protection autour du robinet, et en ce que le chapeau comprend au moins une ouverture formant une fenêtre de visualisation de la position ou de l'état du support d'information, et en ce que le support d'information est mobile relativement au chapeau entre au moins une première position et une seconde position distinctes, le support d'information étant sollicité vers sa seconde position via un organe de rappel agissant uniquement sur le support d'information mobile et pas sur le piston, dans sa position déployée, le piston formant une butée bloquant le support d'information dans sa première position et empêchant son déplacement vers sa seconde position.

Par ailleurs, des modes de réalisation de l'invention peuvent comporter l'une ou plusieurs des caractéristiques suivantes :
- le support d'information est mobile selon un trajet qui coïncide au moins en partie avec la au moins une ouverture,
- dans sa position rétractée le piston n'entrave pas le déplacement du support d'information vers sa seconde position, c'est-à-dire que, en position rétractée du piston, le support d'information est automatiquement déplacé dans sa seconde position par l'action de l'organe de rappel,
- le au moins un support d'information est disposé entre le robinet et le chapeau,
- le piston est mobile relativement au corps du robinet selon au moins trois positions stables: la position rétractée, la position déployée et au moins une position intermédiaire entre les positions déployée et rétractée, lesdites trois positions correspondant respectivement à trois niveaux de pression distincts dans la bouteille,
- le support d'information est déplaçable entre au moins trois positions ou états distincts stables symbolisant respectivement trois niveaux de pression distincts,
- la bouteille comprend plusieurs pistons sensibles à la pression dans la bouteille, notamment deux, trois ou quatre pistons, coopérant avec un deux ou plus de deux supports d'information respectif(s) ou commun(s),
- la bouteille comporte des pistons dont les positions rétractée/déployées respectives relativement au corps du robinet sont configurées pour des niveaux de pression respectifs déterminés différents dans la bouteille, pour commander des positions et/ou des états distincts d'un ou plusieurs supports d'information et afficher respectivement au moins trois niveaux de pression distincts au niveau de la au moins une ouverture,
- le au moins un support d'information comprend un manchon de forme générale cylindrique monté mobile entre le chapeau et le robinet selon une direction verticale parallèle à l'axe vertical de la bouteille, dans au moins une de ses positions, le support d'information étant situé derrière l'ouverture,
- le au moins un support d'information comprend une face externe munie d'une information visuelle comprenant au moins parmi : une zone d'une ou plusieurs couleur(s) ou teinte(s), un ou des symboles alfa-numériques, l'information visuelle étant destinée à être exposée ou non dans l'ouverture selon la position du au moins un support,
- la bouteille comporte une paroi de référence fixée sur le robinet et disposée entre le robinet et le chapeau,
- le robinet est vissé dans un orifice taraudé de la bouteille, la paroi de référence comporte une portion formant une butée de positionnement vertical du chapeau par rapport au robinet,
- la paroi de référence comprend une portion située en regard de la au moins une ouverture formant une fenêtre de visualisation,
- le piston est mobile en translation,
- le support d'information est mobile en translation et/ou en rotation,
- le piston et le support d'information sont mobiles selon des directions non parallèles et de préférence perpendiculaires,
- le piston comprenant une première extrémité en communication avec le circuit fluidique du robinet et une seconde extrémité orientée vers l'extérieur du robinet,
- le piston est sollicité par au moins un organe de rappel vers sa position rétractée,
- le circuit fluidique interne du robinet s'étend entre une extrémité amont communiquant avec le volume de stockage de la bouteille et une extrémité aval débouchant au niveau d'un raccord de sortie du robinet, notamment à un raccord de soutirage et éventuellement de remplissage,
- le au moins un support d'information est intégré à une paroi du chapeau,
- le support d'information est relié mécaniquement au(x) piston(s) via un mécanisme de transmission de mouvement, notamment un système à pignon(s) et/ou crémaillère(s) pour déplacer automatiquement le support d'information lorsque le piston est déplacé,
- le chapeau comporte une première paroi formant une portion tubulaire autour du robinet et s'étendant entre d'une part l'extrémité inférieure reliée à la bouteille et une extrémité supérieure, la ou les l'ouverture étant formées dans la portion cylindrique de la première paroi,
- le support d'information est mobile entre la paroi de référence et le chapeau.

L'invention peut concerner également tout dispositif ou procédé alternatif comprenant toute combinaison des caractéristiques ci-dessus ou ci-dessous, dans le cadre des revendications.

D'autres particularités et avantages apparaîtront à la lecture de la description ci-après, faite en référence aux figures dans lesquelles :
- la figure 1 représente une vue de côté, partiellement en coupe, de l'extrémité supérieure d'une bouteille de fluide sous pression selon un premier exemple de réalisation de l'invention et dans un premier état de remplissage de la bouteille,
- la figure 2 représente une vue agrandie d'un détail de la figure 1,
- la figure 3 représente une vue similaire à celle de la figure 1 dans laquelle la bouteille de fluide sous pression est dans un second état de remplissage,
- les figures 4 et 5 sont des vues similaires à celle de la figure 1 dans lesquelles un outil de conditionnement de la bouteille est introduit dans le chapeau selon respectivement deux positions distinctes,
- la figure 6 est une vue similaire à celle de la figure 5 dans laquelle la bouteille de fluide sous pression est dans son premier état de remplissage,
- la figures 7 est une vue similaire à celle de la figure 3 dans laquelle un organe utilisateur est raccordé au robinet de la bouteille,
- la figure 8 est une en coupe, schématique et partielle, illustrant un autre exemple de réalisation d'un dispositif indicateur de pression selon respectivement trois état distincts,
- les figures 9 à 12 illustrent respectivement schématiquement et de façon partielle quatre modes de réalisation possibles, à chaque fois selon trois états distincts, de la structure d'un organe d'affichage d'information d'un dispositif indicateur de pression selon l'invention,
- les figures 13 et 14 représentent de façon schématique et partielle des vues de dessus d'un robinet illustrant un exemple d'une partie du mécanisme indicateur de pression selon l'invention selon respectivement deux états distincts,
- les figures 15 à 17 représentent de façon schématique et partielles des vues de dessus d'un robinet illustrant un autre exemple d'une partie du mécanisme indicateur de pression selon l'invention selon respectivement trois états distincts,
- les figures 18 à 20 représentent de façon schématique et partielles des vues de dessus d'un robinet illustrant un autre exemple d'une partie du mécanisme indicateur de pression selon l'invention respectivement trois états distincts,
- la figure 21 est une en coupe, schématique et partielle, d'un détail de l'extrémité supérieure d'une bouteille illustrant encore un autre exemple de réalisation d'un dispositif indicateur de pression selon l'invention,
- la figure 22 est une en coupe, schématique et partielle, illustrant un autre exemple de réalisation d'un mécanisme dispositif indicateur de pression selon respectivement trois état distincts,
- la figure 23 est une en coupe transversale, schématique et partielle, illustrant un autre exemple de réalisation d'un mécanisme dispositif indicateur de pression selon un autre mode de réalisation.

La bouteille 6 de fluide sous pression, notamment de gaz sous pression, illustrée aux figures comprend classiquement un robinet 7 abritant un circuit 17 de fluide comprenant au moins une vanne 47 d'isolation. La vanne 47 est par exemple une vanne d'isolation commandée manuellement ou automatiquement via un volant ou levier ou via un pousse-clapet d'un organe qui se raccorde au robinet 7.

Le circuit 17 fluidique interne du robinet 7 s'étend de préférence entre une extrémité amont 27 communiquant avec le volume de stockage de la bouteille 6 (à la pression de stockage de la bouteille 6) et une extrémité aval 37 débouchant au niveau d'un raccord de sortie, notamment à un raccord de soutirage et éventuellement de remplissage.

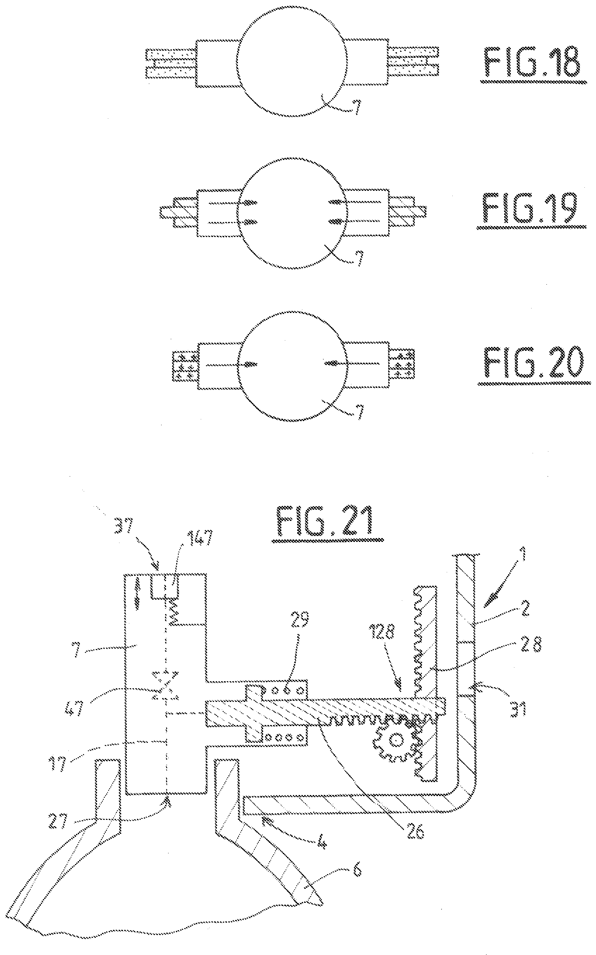

Comme représenté schématiquement à la figure 21, le circuit 17 peut notamment comporter une vanne (clapet) d'isolation 47 et éventuellement un clapet 147 pare-poussière disposé au niveau de l'extrémité aval 37. A ce titre on pourra se référer par exemple de façon non limitative à la structure du robinet décrit dans le document FR2962519A1 qui peut être utilisée au moins en partie dans la présente invention.

La bouteille 6 est munie d'un chapeau 1 de protection du robinet 7. Le chapeau 1 comprend classiquement une structure rigide délimitant un volume de protection autour du robinet (paroi(s) rigide(s) ajourées ou non).

La bouteille 6 comporte un dispositif indicateur de pression comprenant au moins un piston 26 sensible à la pression dans la bouteille 6 et mobile relativement au corps du robinet 7 selon le niveau de pression dans la bouteille 6.

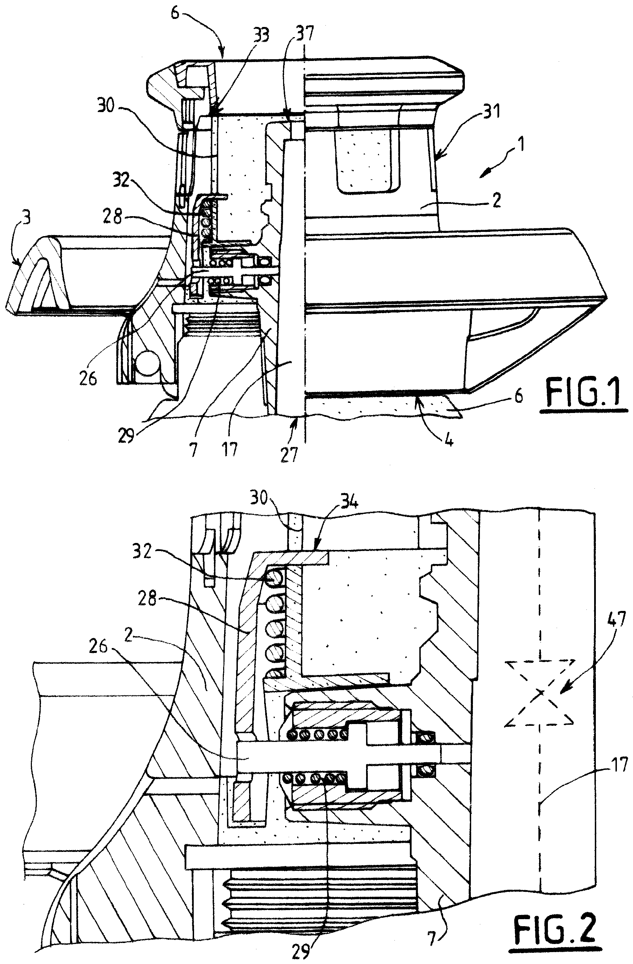

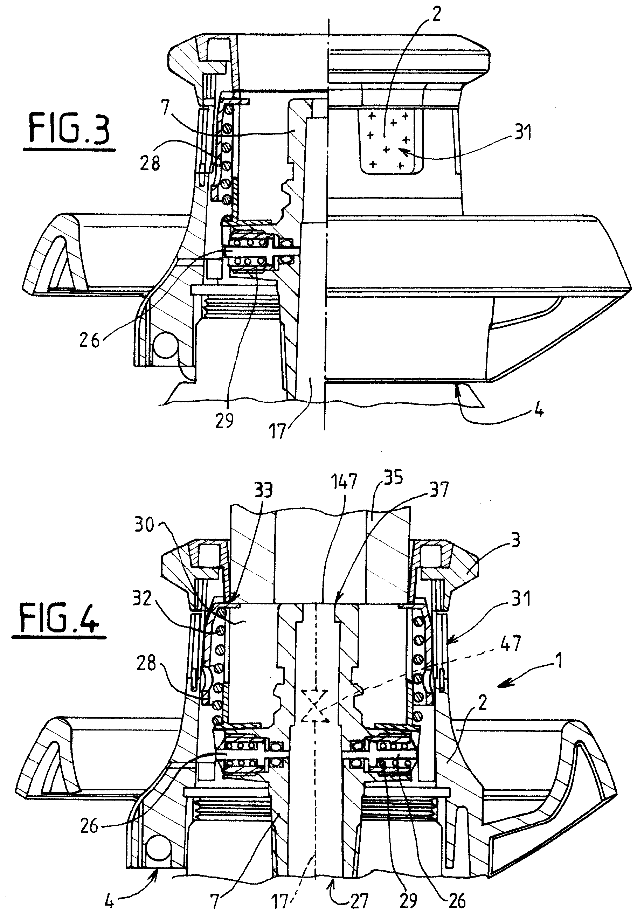

Le piston 26 est de préférence monté dans le corps du robinet 7, par exemple transversalement à l'axe vertical du robinet 7 et de la bouteille 6. Le piston 26 est mobile par rapport au robinet 7 entre au moins une première position rétractée (cf. figures 3, 4, 5, 7) et une seconde position déployée (cf. figures 1, 2 et 6).

Le piston 26 est par exemple mobile en translation. Classiquement, le piston 26 peut comprendre une première extrémité en communication avec le circuit 17 fluidique du robinet 7 (en amont du clapet 47 d'isolation) et une seconde extrémité orientée vers l'extérieur du robinet 7. Le piston 26 peut être sollicité par au moins un organe 29 de rappel (tel qu'un ressort) vers sa position rétractée.

Ainsi, plus la pression dans la bouteille 6 est élevée, plus le piston fait saillie jusqu'à une position limite (position déployée) et inversement lorsque la pression chute le piston 26 se rétracte dans son logement.

De plus, le dispositif indicateur de pression comprend au moins un support 28 d'information mobile destiné à coopérer mécaniquement avec le piston 26 dans au moins une position. Le support 28 d'information est mobile, par exemple en translation, entre au moins deux positions ou états distincts pour symboliser respectivement au moins deux niveaux de pression selon la position du piston 26 par rapport au robinet 7.

De plus, le chapeau 1 comprend au moins une et de préférences plusieurs ouvertures 31 sur sa périphérie formant des fenêtres de visualisation de la position ou de l'état du support 28 d'information.

Le support 28 d'information est par exemple mobile en translation selon une direction parallèle à l'axe vertical (longitudinal) de la bouteille 6.

Par exemple, le support 28 d'information est mobile selon un trajet qui coïncide au moins en partie avec l'ouverture 31 (c'est-à-dire que le support d'information comprend au moins une zone déterminée qui se place ou non derrière l'ouverture, le terme derrière fait référence à la position d'un utilisateur situé devant le robinet et l'ouverture). C'est-à-dire que le support 28 peut être placé ou non en regard de l'ouverture 31.

Le support 28 d'information est par exemple visible au travers de l'ouverture 31 selon une direction de visualisation, notamment une direction de visualisation qui est perpendiculaire à l'axe vertical de la bouteille (en position verticale d'utilisation de la bouteille). C'est-à-dire que l'ouverture 31 est située sur une face latérale du chapeau et un utilisateur peut regarder à travers l'ouverture 31 selon une direction de visualisation perpendiculaire ou sensiblement perpendiculaire à la direction verticale de la bouteille et du chapeau. Le support 28 d'information peut lui être mobile selon un trajet qui est n'est pas parallèle à ladite direction de visualisation. Notamment le trajet du déplacement du support 28 d'information peut être parallèle ou sensiblement parallèle à l'axe vertical de la bouteille. C'est-à-dire que le support 28 d'information peut se déplacer transversalement (perpendiculairement) à la direction de visualisation de l'utilisateur et avoir au moins une partie être visible ou non à travers l'orifice 31 (selon sa position par rapport à l'orifice 31).

Ceci permet de prévoir des directions et amplitudes de mouvement du support 28 d'information mobile qui sont indépendants par rapport aux directions et amplitudes de mouvement du ou des pistons. C'est-à-dire que le support 28 d'information peut se déplacer selon une direction différente et sur un trajet qui n'est pas forcément conditionné par la direction et l'amplitude du déplacement du piston 26.

Ainsi, le support 28 d'information peut être mobile selon une direction transversale (par exemple perpendiculaire) à la direction de déplacement du ou des pistons.

C'est-à-dire que les ouvertures 31 (trou(s) refermé(s) ou non par une fenêtre transparente ou translucide) permettent de voir au travers du chapeau 1 la position relative du support 28 d'information par rapport à la ou les fenêtres 31.

Les ouvertures 31 peuvent être disposées sur une première paroi 2 latérale entourant le robinet 7. Ainsi, en observant latéralement le chapeau 1, un utilisateur peut distinguer de loin si le support 28 d'information est situé (partiellement ou totalement ou pas du tout) derrière l'orifice 31.

Le chapeau 1 peut comporter une ou plusieurs ouvertures de visualisation répartie(s) sur la circonférence du chapeau 1. Par exemple plusieurs ouvertures 31 circulaires ou rectangulaires ou carrées ou une ou plusieurs lumières allongées.

A cet effet, le support 28 d'information peut comprendre une face externe munie d'une information visuelle comprenant au moins parmi : une zone d'une ou plusieurs couleur(s) ou teinte(s) (rouge/jaune/vert) et/ou un ou des symboles alfa-numériques. De cette façon, l'information visuelle peut être exposée ou non dans l'ouverture 31 selon la position du au moins un support 28 par rapport au chapeau 1.

Dans le mode de réalisation des figures 1 à 7, le support 28 d'information est mobile relativement au chapeau 1 entre au moins une première position (par exemple basse cf. figures 1 et 2) et une seconde position distincte (par exemple haute, cf. figure 3). Le support 28 d'information est par ailleurs sollicité vers sa seconde position via un organe de rappel 32 (notamment un ressort). De préférence, l'organe 32 de rappel agit directement (ou via une pièce intermédiaire) sur le support 28 d'information pour le déplacer vers sa seconde position. Cet organe 32 de rappel agit uniquement sur le support 28 d'information mobile et pas sur le ou les pistons 26. Ceci permet de prévoir des déplacements du support 28 d'information (amplitude et direction) qui ne sont pas dépendant de l'amplitude et de la direction du déplacement du piston. En clair, un faible déplacement du piston 26 peut libérer le support 28 d'information qui se déplace selon une direction déterminée et un trajet déterminé sous l'action de l'organe 32 de rappel.

De plus, dans sa position déployée, le piston 26 forme une butée bloquant le support 28 d'information dans sa première position et empêchant son déplacement vers sa seconde position. Dans l'exemple non limitatif représenté à la figure 1, lorsque le support 28 d'information est dans sa première position et que le piston 26 est dans sa position déployée, le piston 26 est reçu dans un logement ou orifice conjugué formé dans le support 28 d'information. C'est-à-dire que le piston 26 forme un doigt de blocage du support 28 d'information.

En revanche, lorsque le piston 26 se rétracte (en dessous d'un seuil de pression déterminé dans la bouteille 6), le piston 26 arrive dans une position dans laquelle il n'entrave plus le déplacement du support 28 d'information. Par exemple une extrémité du piston 26 sort de l'orifice du support 28 d'information (cf. figure 3).

Le support 28 d'information peut être automatiquement déplacé dans sa seconde position par l'action de l'organe 32 de rappel.

Ces deux positions distinctes déterminent deux informations distinctes visibles au travers du ou des orifices 31. Par exemple une première couleur telle que du vert est placée derrière l'orifice 31 dans le cas où la pression dans la bouteille 6 est supérieure à un seuil déterminé (correspondant par exemple à 10% ou 15% ou 20% ou 25% ou 30% ou plus de sa pression maximale). En revanche, une seconde couleur telle que du rouge est placée derrière l'orifice 31 dans le cas où la pression dans la bouteille 6 est inférieure à ce seuil déterminé. Le seuil de basculement d'une configuration à l'autre pourra être choisi en fonction des applications ou besoins en dimensionnant par exemple la contrainte de l'organe 29 de rappel agissant sur le piston 26.

Comme illustré, de préférence le support 28 d'information est disposé entre le robinet 7 et une paroi 2 du chapeau 1.

Comme visible aux figures 4, 5 et 7, le dispositif indicateur de pression peut comporter deux (ou plus) pistons 26 répartis autour du corps du robinet 7.

Le support 28 d'information peut comprendre par exemple un manchon de forme générale cylindrique monté mobile entre le chapeau 1 et le robinet 7. Le manchon cylindre peut par exemple coulisser verticalement selon une direction parallèle à ses génératrices et à l'axe longitudinal de la bouteille. Deux extrémités latérales du manchon 28 sont prévues pour coopérer (orifices ou autres) avec des pistons 26 respectifs.

Deux ou plus de deux pistons 26 peuvent coopérer avec un même support 28 d'information ou avec des supports 28 d'information respectifs distincts et indépendants ou non.

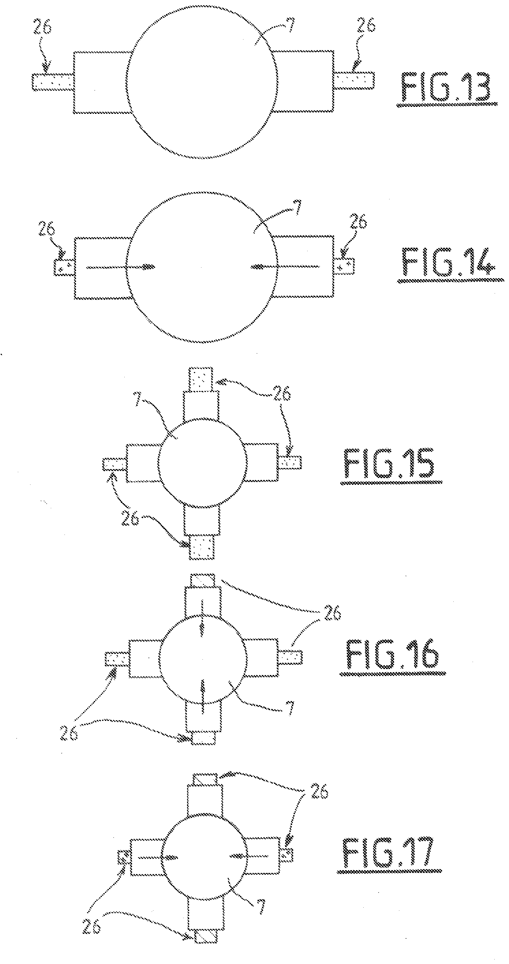

La figure 13 symbolise schématiquement une vue de dessus du robinet 7 avec deux pistons 26 déployés tandis que la figure 14 représente ce même arrangement avec les deux pistons 26 rétractés. Par des raisons de simplification, le support d'information n'est pas représenté mais les teintes des pistons 26 ont été modifiées entre les figures 13 et 14 selon leur position pour symboliser la différence de teinte ou d'information qui est générée au niveau des orifices 31 de visualisation (via le ou le supports 28 d'information).

Dans les exemples ci-dessus, l'indicateur de pression peut indiquer deux états (correspondant respectivement à deux niveaux de pression). Bien entendu, l'invention n'est pas limitée à cet exemple. Ainsi, il est possible d'envisager l'affichage de trois ou plus de trois niveaux différents de pression (quatre, cinq...). Trois niveaux de pression peuvent être définis par rapport à deux seuils de pression dans la bouteille ((i) une pression au-dessus d'un premier seuil de pression, (ii) une pression entre le premier seuil de pression et un second seuil de pression et (iii) une pression en-dessous du second seuil de pression).

Ceci peut être obtenu via un, deux, ou plus de deux pistons 26 coopérant avec un ou plusieurs supports 28 d'affichage.

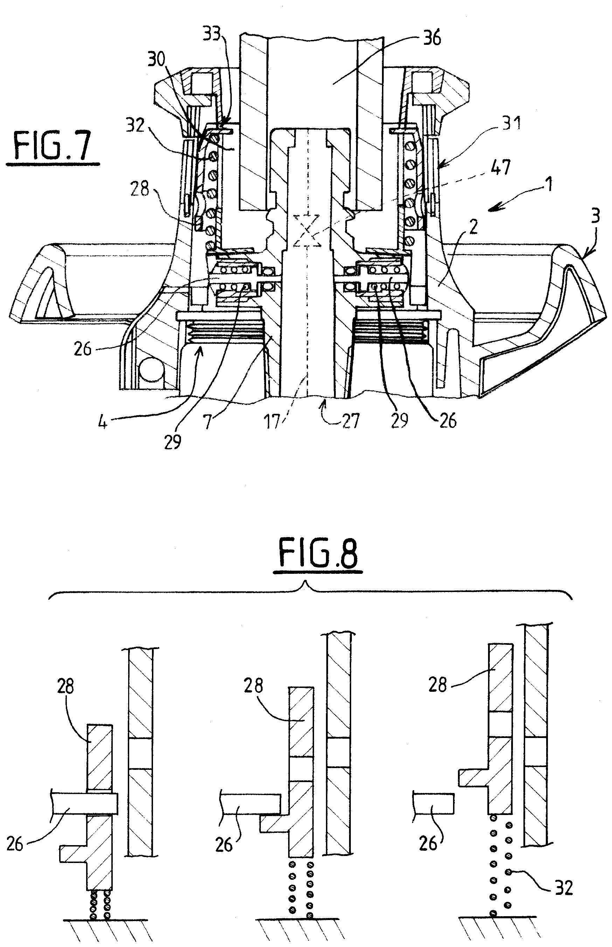

Dans l'exemple de la figure 8, le piston 26 peut venir se placer dans trois positions stables distinctes selon la pression dans la bouteille 6. Au dessus d'un premier seuil de pression, dans une première position, par exemple déployée (à la gauche de la figure 8), le piston 26 bloque le support 28 d'information dans une première position (par exemple une position basse). En dessous de ce premier seuil de pression le piston 26 se rétracte en partie et libère le support 28 d'information qui est déplacé par un organe 32 de rappel dans une seconde position stable bloquée par le piston 26 (par exemple via une butée) cf. partie centrale de la figure 8 (position intermédiaire). Enfin, en dessous d'un deuxième seuil de pression inférieur au premier seuil, le piston 26 se rétracte complètement et libère complètement le support 28 d'information qui adopte une troisième position par rapport à l'orifice 31 de visualisation (par exemple une position haute).

Ces trois niveaux de pression génèrent ainsi trois affichages distincts au niveau du ou des orifices 31 de visualisation.

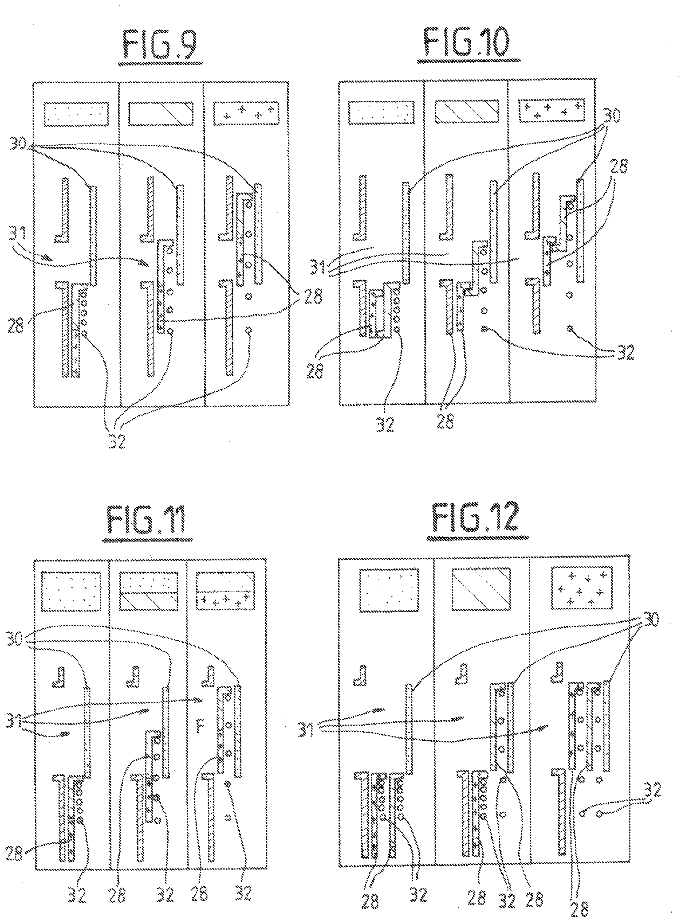

Cette structure est également schématisée en coupe verticale à la figure 9 où le support d'information 28 peut adopter trois positions stables distinctes par rapport à une fenêtre 31 de visualisation. Ces trois positions mettent en évidence au niveau de la fenêtre 31 des couleurs et/ou symboles respectifs distincts (cf. les vues de face de la fenêtre qui sont illustrées dans des rectangles dans la partie supérieure de la figure 9). De gauche à droite les trois positions correspondent par exemple à trois niveaux décroissants de pression.

La variante de la figure 10 se distingue de celle de la figure 9 en ce que le support 28 d'information comporte deux pièces distinctes qui peuvent s'emboîter (première position) ou se déployer relativement (deuxième et troisième positions). Par exemple, l'organe de rappel 32 agit sur l'une des pièces qui entraine la seconde pièce dans la troisième position.

Dans la variante de la figure 11, le support 28 d'information comporte deux portions adjacentes munies d'informations (couleurs ou autre) respectives distinctes. Ceci permet de produire trois affichages distincts (une couleur dans la première position (donnée par un fond fixe du robinet ou d'une paroi 30 logée dans le chapeau 1), une première combinaison de deux couleurs dans la seconde position et une deuxième combinaison de couleurs dans la troisième position).

Dans la variante de la figure 12, le support 28 d'information comprend deux pièces distinctes associées chacune à un organe 32 de rappel (ressort) respectif. Dans la première position à gauche les deux supports 28 d'information sont hors de la fenêtre 31 de visualisation. Dans la seconde position centrale, un seul support 28 d'information est placé face à l'orifice 31 de visualisation. Dans la troisième position de droite le second support 28 d'information fait également face à l'orifice de visualisation et vient occulter le premier support d'information.

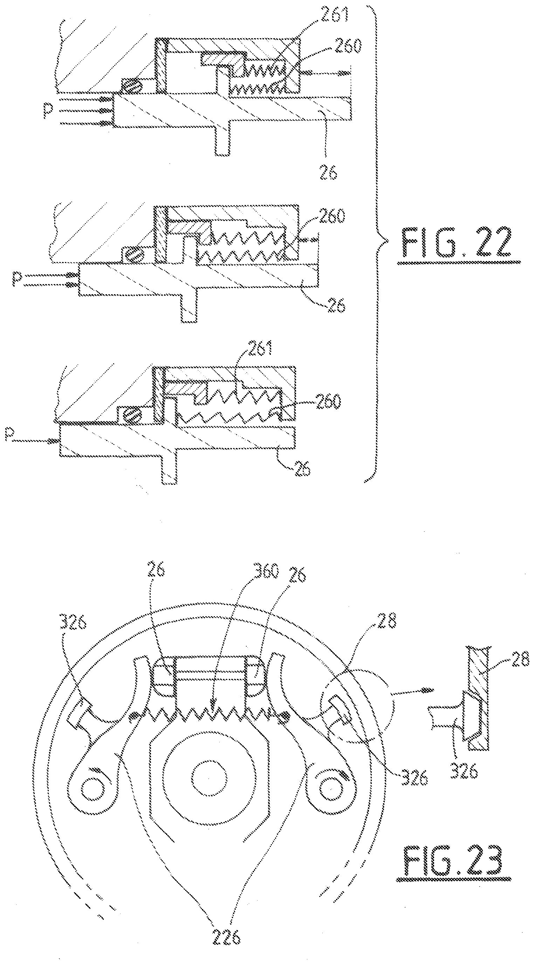

La figure 22 illustre de façon schématique et partielle un exemple possible de mécanisme de contrôle de la position du piston 26 (respectivement trois positions) qui peut être appliqué à l'arrangement de la figure 8. Une extrémité du piston 26 est soumise à la pression P dans la bouteille. Lorsque la pression P est supérieure à un premier seuil, le piston 6 est dans une première position malgré l'effort d'un premier 260 et d'un second 261 agissant en parallèle sur le piston 26 (configuration à l'extrémité supérieure de la figure 22). Lorsque cette pression diminue au dessous de ce premier seuil, les ressorts 260, 261 contraignent le piston 26 dans une seconde position intermédiaire (configuration centrale de la figure 22). En fin, lorsque la pression diminue encore en dessous d'un second seul, le piston n'est plus en contact avec le second ressort 216 et vient dans une troisième position (en bas de la figure 22). Ainsi, les trois positions du piston 26 de l'agencement de la figure 8 (en saillie, intermédiaire, et rétractée) peuvent être obtenues via un mécanisme à un ou deux pistons en parallèle décrit ci-dessus.

La figure 15 illustre une vue de dessus, schématique et partielle, d'un robinet 7 illustrant une autre variante de réalisation à quatre pistons 26. Dans la configuration ou état de la figure 15, les quatre pistons 26 sont en position déployée et commandent une première information via le ou les supports 28 de visualisation. Par soucis de simplification le ou les supports 28 de visualisation ne sont pas représentés aux figures 15 à 17 mais l'information correspondante affichée est symbolisée en teintant le ou les pistons 26. Dans l'état de remplissage de la figure 15, correspond par exemple à un état rempli de la bouteille, via une couleur verte.

Dans l'état de la figure 16, lorsque la pression dans la bouteille atteint un niveau déterminé seuls deux pistons 26 diamétralement opposés se sont rétractés (symbolisé) par des flèches. Ces deux pistons 26 rétractés modifient la position ou l'état d'un ou plusieurs supports d'information pour modifier l'information visible par les orifices 31 de visualisation (couleur jaune au lieu de vert par exemple).

Dans l'état de la figure 17, lorsque la pression baisse encore jusqu'à un autre niveau déterminé, les deux autres pistons 26 diamétralement opposés se sont rétractés également. Ces deux pistons 26 rétractés modifient la position ou l'état d'un ou plusieurs supports d'information pour modifier l'information visible par les orifices 31 de visualisation (couleur rouge au lieu de jaune par exemple).

Dans la variante des figures 18 à 20 le robinet 7 comprend deux paires de pistons 26 concentriques disposés de façon diamétralement opposée (par rapport à l'axe vertical du robinet et de la bouteille).

Dans l'état de la figure 18 les deux paires de pistons sont déployés et conditionnent l'affichage d'une première information (par exemple une couleur verte correspondant à un état de pression supérieur à un premier seuil de pression dans la bouteille).

Dans l'état de la figure 19 une première paire de pistons 26 se sont rétractés (cf. flèches) et conditionnent l'affichage d'une seconde information (par exemple une couleur jaune correspondant à un état de pression inférieur à un premier seuil de pression mais supérieur à un second seuil dans la bouteille).

Dans l'état de la figure 20 la seconde paire de pistons 26 s'est rétractée également (cf. flèches) et conditionne l'affichage d'une troisième information (par exemple une couleur rouge correspondant à un état de pression inférieur au second seuil de pression).

La figure 21 symbolise schématiquement encore une autre variante dans laquelle un support 28 d'information est relié mécaniquement au(x) piston(s) 26 via un mécanisme 128 de transmission de mouvement. C'est-à-dire que le support 28 d'information est déplacé continument avec le piston 26. Par exemple, un système à pignon(s) et/ou crémaillère(s) peut être prévu pour déplacer automatiquement le support 28 d'information par rapport à l'ouverture 31 de visualisation lorsque le piston 26 est déplacé.

Comme visible à la figure 2, l'extrémité supérieure du support 28 d'information peut comporter une zone 34 (par exemple une portion horizontale) destinée à coopérer avec un outil de remplissage de la bouteille 6.

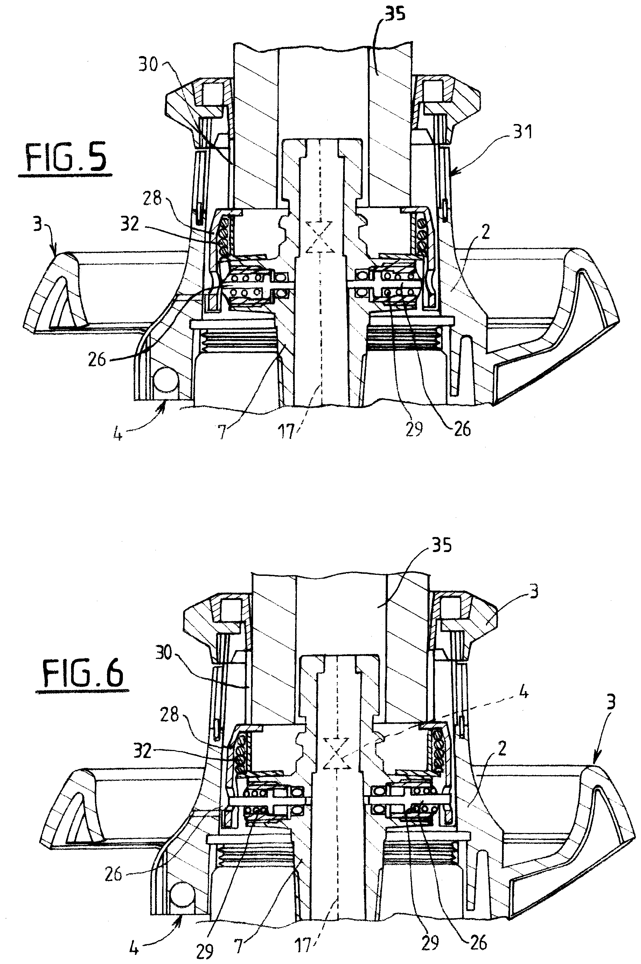

Ainsi, et comme schématisé à la figure 4, lorsque la bouteille 6 est vide ou presque vide, un outil 35 de conditionnement (de remplissage) peut être relié au robinet 7 via une ouverture (par exemple verticale du chapeau 1). Cet outil 35 peut se raccorder à un raccord du robinet 7 et en même temps déplacer (pousser) le support 28 d'information contre l'effort de l'organe 32 de rappel (cf. figure 5).

L'outil comporte une extrémité tubulaire qui vient s'enfiler sur le robinet 7 et repousser en même temps le support 28 d'information.

C'est-à-dire que l'outil 35 de remplissage assure le « réarmement » du support 28 d'information. Lorsque la bouteille 6 est remplie, le piston 26 vient à nouveau coopérer avec le support 28 (cf. figure 6). Le système est à nouveau dans la configuration de la figure 1.

Les dimensions relatives du robinet 7 et du ou des supports 28 d'information sont prévues pour laisser un interstice entre le robinet 7 et le support 28 d'information (par exemple 10mm) permettant à un autre organe 36 (raccord de flexible, robinet avec ou sans détendeur...) de venir se raccorder au robinet 7 sans interférer avec le support 28 d'information (cf. figure 7). Cette agencement concentrique du robinet 7, du ou des supports 28 d'information et du chapeau 1 présente donc de multiples avantages.

Dans les exemples non limitatifs ci-dessus le chapeau 1 comporte une première paroi 2 formant une portion tubulaire autour du robinet 7 et s'étendant entre d'une part l'extrémité inférieure 4 reliée à la bouteille 6 et une extrémité supérieure 12 délimitant un orifice 5 d'accès. Au moins une partie des ouvertures 31 de visualisation sont formées de préférence dans cette portion cylindrique de la première paroi 2.

De plus, et sans que ceci soit limitatif pour autant, comme illustré aux figures 1 à 7, le chapeau 1 peut comprendre en outre une seconde paroi 3 disposée concentriquement de façon espacée autour de la première paroi 1 et délimitant une zone de protection autour de la première paroi 2. Cette seconde paroi peut notamment former une zone de préhension manuelle et une protection supplémentaire des orifices de visualisation. La seconde paroi 3 comprend par exemple une portion annulaire 13 disposée concentriquement autour de la première paroi 2.

De préférence, les orifices 31 de visualisation sont situés au-dessus de l'extrémité supérieure de la seconde paroi 3 (par rapport à la direction verticale de la bouteille 6).

Comme illustré aux figures 1 à 7, le dispositif peut comporter une paroi 30 interne de référence située dans le chapeau 1 entre le robinet 7 et le chapeau 1 et notamment entre le robinet 7 et le support 28 d'information. Cette paroi 30 de référence peut être fixée sur le robinet 7. Cette paroi 30 de référence possède de préférence une zone en regard du ou des orifices 31 de visualisation. C'est-à-dire que cette paroi 30 de référence peut indiquer une information (couleur ou autre) par l'orifice 31 de visualisation lorsque le support 28 d'information ne vient pas l'occulter (cf. figures).

Le robinet 7 peut être vissé dans un orifice taraudé de la bouteille 6. Le positionnement précis du robinet 7 par rapport au chapeau 1 peut être important pour des raisons industrielles en particulier pour prévoir la connexion au robinet de robinets/outils de conditionnement.

Ainsi le positionnement relatif d'une extrémité aval 37 supérieure du robinet 7 formant un raccord fluidique par rapport à l'extrémité du chapeau 1 doit pouvoir être maîtrisé. Ceci peut être relativement malaisé si le robinet 7 est vissé dans la bouteille 6 du fait des tolérances de fabrication et de montage.

A cet effet, la paroi 30 de référence peut former également une référence géométrique du positionnement du robinet 7 par rapport au chapeau 1. A cet effet, la paroi 30 de référence peut comporter une portion (par exemple une extrémité, notamment supérieure cf. figure 1 formant une butée 33 de positionnement vertical du chapeau 1 par rapport au robinet 7. C'est-à-dire que le vissage du robinet 7 dans la bouteille peut être réalisé à une hauteur définie précisément par cette butée 33 entre la paroi de référence et le chapeau 1. Inversement, le positionnement vertical précis du chapeau1 sur la bouteille 6 peut être défini par cette butée 33 contre la paroi 30 de référence.

Cet structure ou agencement peut être utilisée indépendamment du dispositif indicateur de pression décrit ci-dessus. C'est-à-dire qu'un mode de réalisation peut comprendre une bouteille de fluide sous pression munie d'un robinet (notamment vissé dans la bouteille 6), d'un chapeau 1 de protection du robinet et une paroi 30 de référence fixée sur le robinet 7 et comprenant une butée 33 de positionnement vertical (et/ou latérale et/ou angulaire) du chapeau 1 par rapport au robinet 7.

La figure 23 illustre en vue de dessus encore une autre variante de réalisation du dispositif indicateur de pression. Dans cet exemple, le support 28 d'information a la forme d'une paroi arrondie, par exemple tubulaire. Ce support 28 d'information est bloqué verticalement par un système de deux pistons doigts 326 solidaires respectivement deux bras 226 articulés contraints vers une position rapproché l'un de l'autre via un organe 360 de rappel tel qu'un ressort. Les deux bras 226 articulés sont également sollicités respectivement par deux par deux pistons 26. Lorsque la pression dans la bouteille 6 est au-dessus d'un seuil, les pistons 26 écartent les deux bras 226 et les doigts 326 interfèrent en butée avec le support 28 d'information (cf. à la figure 23 la vue en coupe du détail agrandi). Lorsque la pression dans la bouteille diminue en-dessous du seuil, les pistons 2 6se rétractent relativement et les bras 226 se rapprochent, libérant le support 28 d'information des doigts 326. C'est-à-dire que le support 28 d'information peut être déplacé par un ressort de rappel (non représenté à la figure 23).

## Revendications

1. Bouteille de fluide sous pression, notamment de gaz sous pression, comprenant un robinet (7) abritant un circuit (17) de fluide comportant au moins une vanne (47) d'isolation, la bouteille (6) comprenant un dispositif indicateur de pression comprenant au moins un piston (26) sensible à la pression dans la bouteille (6) et mobile relativement au corps du robinet (7) selon le niveau de pression dans la bouteille (6) entre au moins une première position rétractée et une seconde position déployée, le dispositif indicateur de pression comprenant au moins un support (28) d'information mobile destiné à coopérer mécaniquement avec le piston (26), le support (28) d'information étant déplaçable entre au moins deux positions ou états distincts pour symboliser respectivement au moins deux niveaux de pression selon la position du piston (26), **caractérisée en ce que** la bouteille (6) est munie d'un chapeau (1) de protection du robinet (7) comprenant une structure rigide délimitant un volume de protection autour du robinet (7), et **en ce que** le support (28) d'information est mobile relativement au chapeau (1) entre au moins une première position et une seconde position distinctes, et **en ce que** le support (28) d'information est sollicité vers sa seconde position via un organe de rappel (32) agissant uniquement sur le support (28) d'information mobile et pas sur le piston (26) et **en ce que**, dans sa position déployée, le piston (26) forme une butée bloquant le support (28) d'information dans sa première position et empêchant son déplacement vers sa seconde position, et **en ce que** le chapeau (1) comprend au moins une ouverture (31) formant une fenêtre de visualisation de la position ou de l'état du support (28) d'information.

2. Bouteille selon la revendication 1, **caractérisée en ce que** le support (28) d'information est mobile selon un trajet qui coïncide au moins en partie avec la au moins une ouverture (31).

3. Bouteille selon la revendication 2, **caractérisée en ce que** le support (28) d'information est visible au travers de l'ouverture (31) selon une direction de visualisation, notamment la direction de visualisation est perpendiculaire à l'axe vertical de la bouteille et **en ce que** le support (28) d'information est mobile selon un trajet qui est n'est pas parallèle à ladite direction de visualisation, notamment le trajet est parallèle à l'axe vertical de la bouteille.

4. Bouteille selon l'une quelconque des revendications 1 à 3, **caractérisée en ce que** dans sa position rétractée le piston (26) n'entrave pas le déplacement du support (28) d'information vers sa seconde position, c'est-à-dire que, en position rétractée du piston (26), le support (28) d'information est automatiquement déplacé dans sa seconde position par l'action de l'organe (32) de rappel.

5. Bouteille selon l'une quelconque des revendications 1 à 4, **caractérisée en ce que** le au moins un support (28) d'information est disposé entre le robinet (7) et le chapeau (1)

6. Bouteille selon l'une quelconque des revendications 1 à 5, **caractérisée en ce que** le piston (26) est mobile relativement au corps du robinet (7) selon au moins trois positions stables: la position rétractée, la position déployée et au moins une position intermédiaire entre les positions déployée et rétractée, lesdites trois positions correspondant respectivement à trois niveaux de pression distincts dans la bouteille (6).

7. Bouteille selon l'une quelconque des revendications 1 à 6, **caractérisée en ce que** le support (28) d'information est déplaçable entre au moins trois positions ou états distincts stables symbolisant respectivement trois niveaux de pression distincts.

8. Bouteille selon l'une quelconque des revendications 1 à 7, **caractérisée en ce qu'**elle comprend plusieurs pistons (26) sensibles à la pression dans la bouteille (6), notamment deux, trois ou quatre pistons (26), coopérant avec un deux ou plus de deux supports (28) d'information respectif ou commun(s).

9. Bouteille selon la revendication 8, **caractérisée en ce qu'**elle comporte des pistons (26) dont les positions rétractée/déployées respectives relativement au corps du robinet (7) sont configurées pour des niveaux de pression respectifs déterminés différents dans la bouteille (6), pour commander des positions et/ou des états distincts d'un ou plusieurs supports (28) d'information et afficher respectivement au moins trois niveaux de pression distincts au niveau de la au moins une ouverture (31).

10. Bouteille selon l'une quelconque des revendications 1 à 9, **caractérisée en ce que** le au moins un support (28) d'information comprend un manchon de forme générale cylindrique monté mobile entre le chapeau (1) et le robinet (7) selon une direction verticale parallèle à l'axe vertical de la bouteille (6) et **en ce que**, dans au moins une de ses positions, le support (28) d'information est situé derrière l'ouverture (31).

11. Bouteille selon l'une quelconque des revendications 1 à 10, **caractérisée en ce que** le au moins un support (28) d'information comprend une face externe munie d'une information visuelle comprenant au moins parmi : une zone d'une ou plusieurs couleur(s) ou teinte(s), un ou des symboles alfa-numériques, l'information visuelle étant destinée à être exposée ou non dans l'ouverture (31) selon la position du au moins un support (28).

12. Bouteille selon l'une quelconque des revendications 1 à 11, **caractérisée en ce qu'**elle comporte une paroi (30) de référence fixée sur le robinet (7) et disposée entre le robinet et le chapeau (1).

13. Bouteille selon la revendication 12, **caractérisée en ce que** le robinet (7) est vissé dans un orifice taraudé de la bouteille (6) et **en ce que** la paroi (30) de référence comporte une portion formant une butée (33) de positionnement vertical du chapeau (1) par rapport au robinet (7).

14. Bouteille selon la revendication 12 ou 13, **caractérisée en ce que** la paroi (30) de référence comprend une portion située en regard de la au moins une ouverture (31) formant une fenêtre de visualisation.

15. Bouteille selon l'une quelconque des revendications 1 à 14, **caractérisée en ce que** l'organe de rappel (32) sollicite et agit directement sur le support (28) d'information pour le déplacer vers sa seconde position.

## Patentansprüche

1. Flasche für Druckfluid, insbesondere ein Druckgas, umfassend einen Schließhahn (7), der einen Fluidkreislauf (17) aufnimmt, der mindestens ein Absperrventil (47) beinhaltet, wobei die Flasche (6) eine Druckanzeigevorrichtung umfasst, die mindestens einen Kolben (26) umfasst, der auf den Druck in der Flasche (6) anspricht und relativ zum Körper des Schließhahns (7) je nach Druckstufe in der Flasche (6) zwischen mindestens einer ersten eingefahrenen Position und einer zweiten ausgefahrenen Position beweglich ist, wobei die Druckanzeigevorrichtung mindestens einen beweglichen Informationsträger (28) umfasst, der zum mechanischen Zusammenwirken mit dem Kolben (26) bestimmt ist, wobei der Informationsträger (28) zwischen mindestens zwei verschiedenen Positionen oder Zuständen verschiebbar ist, um jeweils mindestens zwei Druckstufen je nach Position des Kolbens (26) zu symbolisieren, **dadurch gekennzeichnet, dass** die Flasche (6) mit einer Kappe (1) zum Schutz des Schließhahns (7) ausgestattet ist, die eine starre Struktur umfasst, die ein Schutzvolumen um den Schließhahn (7) begrenzt, und dadurch, dass der Informationsträger (28) relativ zur Kappe (1) zwischen mindestens einer ersten Position und einer zweiten Position, die verschieden sind, beweglich ist und dass der Informationsträger (28) mittels eines Rückstellorgans (32), das nur auf den beweglichen Informationsträger (28) und nicht auf den Kolben (26) einwirkt, in Richtung seiner zweiten Position gepresst wird und dadurch, dass der Kolben (26) in seiner ausgefahrenen Position einen Anschlag bildet, der den Informationsträger (28) in seiner ersten Position blockiert und seine Verschiebung in Richtung seiner zweiten Position verhindert und dadurch, dass die Kappe (1) mindestens eine Öffnung (31) umfasst, die ein Fenster zur Visualisierung der Position oder des Zustands des Informationsträgers (28) bildet.

2. Flasche nach Anspruch 1, **dadurch gekennzeichnet, dass** der Informationsträger (28) entlang eines Weges beweglich ist, der zumindest teilweise mit der mindestens einen Öffnung (31) zusammenfällt.

3. Flasche nach Anspruch 2, **dadurch gekennzeichnet, dass** der Informationsträger (28) durch die Öffnung (31) entlang einer Visualisierungsrichtung sichtbar ist, wobei die Visualisierungsrichtung insbesondere senkrecht zur vertikalen Achse der Flasche ist, und dadurch, dass der Informationsträger (28) entlang eines Weges, der nicht parallel zur Visualisierungsrichtung ist, beweglich ist, wobei der Weg insbesondere parallel zur vertikalen Achse der Flasche ist.

4. Flasche nach einem der Ansprüche 1 bis 3, **dadurch gekennzeichnet, dass** der Kolben (26) in seiner eingefahrenen Position die Verschiebung des Informationsträgers (28) in Richtung seiner zweiten Position nicht behindert, d. h., dass der Informationsträger (28) in der eingefahrenen Position des Kolbens (26) durch die Einwirkung des Rückstellorgans (32) automatisch in seine zweite Position verschoben wird.

5. Flasche nach einem der Ansprüche 1 bis 4, **dadurch gekennzeichnet, dass** der mindestens eine Informationsträger (28) zwischen dem Schließhahn (7) und der Kappe (1) angeordnet ist.

6. Flasche nach einem der Ansprüche 1 bis 5, **dadurch gekennzeichnet, dass** der Kolben (26) relativ zum Körper des Schließhahns (7) entlang mindestens dreier stabiler Positionen beweglich ist: der eingefahrenen Position, der ausgefahrenen Position und mindestens einer Zwischenposition zwischen der ausgefahrenen und der eingefahrenen Position, wobei die drei Positionen jeweils drei verschiedenen Druckstufen in der Flasche (6) entsprechen.

7. Flasche nach einem der Ansprüche 1 bis 6, **dadurch gekennzeichnet, dass** der Informationsträger (28) zwischen mindestens drei unterschiedlichen stabilen Positionen oder Zuständen verschiebbar ist, die jeweils drei verschiedene Druckstufen symbolisieren.

8. Flasche nach einem der Ansprüche 1 bis 7, **dadurch gekennzeichnet, dass** sie mehrere auf den Druck in der Flasche (6) ansprechende Kolben (26) umfasst, insbesondere zwei, drei oder vier Kolben (26), die mit einem, zwei oder mehr als zwei jeweiligen oder gemeinsamen Informationsträgern (28) zusammenwirken.

9. Flasche nach Anspruch 8, **dadurch gekennzeichnet, dass** sie Kolben (26) umfasst, deren jeweilige eingefahrene/ausgefahrene Positionen relativ zum Körper des Schließhahns (7) für jeweilige bestimmte verschiedene Druckstufen in der Flasche (6) konfiguriert sind, um die verschiedenen Positionen und/oder Zustände eines oder mehrerer Informationsträger (28) zu steuern und jeweils mindestens drei verschiedene Druckstufen im Bereich der mindestens einen Öffnung (31) anzuzeigen.

10. Flasche nach einem der Ansprüche 1 bis 9, **dadurch gekennzeichnet, dass** der mindestens eine Informationsträger (28) eine im Allgemeinen zylindrische Hülse umfasst, die zwischen der Kappe (1) und dem Schließhahn (7) entlang einer vertikalen Richtung parallel zur vertikalen Achse der Flasche (6) beweglich montiert ist und dadurch, dass der Informationsträger (28) sich in mindestens einer seiner Positionen hinter der Öffnung (31) befindet.

11. Flasche nach einem der Ansprüche 1 bis 10, **dadurch gekennzeichnet, dass** der mindestens eine Informationsträger (28) eine Außenseite umfasst, die mit einer visuellen Information ausgestattet ist, welche zumindest eines umfasst aus: einer Zone einer oder mehrerer Farben oder Farbschattierungen und/oder eines oder mehrerer alphanumerischer Symbole, wobei die visuelle Information dazu bestimmt ist, entsprechend der Position des mindestens einen Trägers (28) in der Öffnung (31) frei zu liegen oder nicht.

12. Flasche nach einem der Ansprüche 1 bis 11, **dadurch gekennzeichnet, dass** sie eine Referenzwand (30) beinhaltet, die am Schließhahn (7) befestigt ist und zwischen dem Schließhahn und der Kappe (1) angeordnet ist.

13. Flasche nach Anspruch 12, **dadurch gekennzeichnet, dass** der Schließhahn (7) in eine Gewindebohrung der Flasche (6) geschraubt ist und dass die Referenzwand (30) einen Abschnitt beinhaltet, der einen Anschlag (33) zur vertikalen Positionierung der Kappe (1) in Bezug auf den Schließhahn (7) bildet.

14. Flasche nach Anspruch 12 oder 13, **dadurch gekennzeichnet, dass** die Referenzwand (30) einen Abschnitt umfasst, der sich gegenüber der mindestens einen ein Visualisierungsfenster bildenden Öffnung (31) befindet.

15. Flasche nach einem der Ansprüche 1 bis 14, **dadurch gekennzeichnet, dass** das Rückstellorgan (32) direkt auf den Informationsträger (28) presst und auf ihn einwirkt, um ihn in Richtung seiner zweiten Position zu verschieben.

## Claims

1. Cylinder of pressurised fluid, in particular of pressurised gas, comprising a tap (7) containing a fluid circuit (17) comprising at least one isolation valve (47), the cylinder (6) comprising a pressure-indicating device comprising at least one pressure-sensitive piston (26) in the cylinder (6) and movable relative to the body of the tap (7) according to the pressure level in the cylinder (6) between at least one first retracted position and a second deployed position, the pressure-indicating device comprising at least one movable information support (28) intended for mechanically cooperating with the piston (26), the information support (28) being movable between at least two separate positions or states in order to symbolise at least two pressure levels, respectively, according to the position of the piston (26), **characterised in that** the cylinder (6) is provided with a cap (1) for protecting the tap (7) comprising a rigid structure delimiting a protective volume around the tap (7), and **in that** the information support (28) is movable relative to the cap (1) between at least one separate first position and one separate second position, and **in that** the information support (28) is urged towards the second position thereof via a return member (32) acting solely on the movable information support (28) and not on the piston (26) and **in that**, in the deployed position thereof, the piston (26) forms an abutment that blocks the information support (28) in the first position thereof and that prevents it from moving to the second position thereof, and **in that** the cap (1) comprises at least one opening (31) forming a window for viewing the position or the state of the information (28) support.

2. Cylinder according to claim 1, **characterised in that** the information support (28) is movable along a path that coincides at least partially with the at least one opening (31).

3. Cylinder according to claim 2, **characterised in that** the information support (28) can be seen through the opening (31) along a viewing direction, in particular the viewing direction is perpendicular to the vertical axis of the cylinder and **in that** the information support (28) is movable along a path which is not parallel to said viewing direction, in particular the path is parallel to the vertical axis of the cylinder.

4. Cylinder according to any of claims 1 to 3, **characterised in that** in the retracted position thereof the piston (26) does not impede the movement of the information support (28) towards the second position thereof, i.e. in the retracted position of the piston (26), the information support (28) is automatically moved in the second position thereof by the action of the return member (32).

5. Cylinder according to any of claims 1 to 4, **characterised in that** the at least one information support (28) is arranged between the tap (7) and the cap (1).

6. Cylinder according to any of claims 1 to 5, **characterised in that** the piston (26) is movable relative to the body of the tap (7) according to at least three stable positions: the retracted position, the deployed position and at least one intermediate position between the deployed and retracted positions, said three positions corresponding respectively to three separate pressure levels in the cylinder (6).

7. Cylinder according to any of claims 1 to 6, **characterised in that** the information support (28) can be moved between at least three separate stable positions or states that respectively symbolise three separate pressure levels.

8. Cylinder according to any one of claims 1 to 7, **characterised in that** it comprises several pressure-sensitive pistons (26) in the cylinder (6), in particular two, three or four pistons (26), cooperating with one, two or more of two respective or common information supports (28).

9. Cylinder according to claim 8, **characterised in that** it comprises pistons (26) of which the respective retracted/deployed positions relative to the body of the tap (7) are configured for different determined respective pressure levels in the cylinder (6), to control separate positions and/or states of one or more information supports (28) and to respectively display at least three separate pressure levels on the at least one opening (31).

10. Cylinder according to any of claims 1 to 9, **characterised in that** the at least one information support (28) comprises a general cylindrically-shaped sleeve movably mounted between the cap (1) and the tap (7) along a vertical direction parallel to the vertical axis of the cylinder (6) and **in that**, in at least one of the positions thereof, the information support (28) is located behind the opening (31).

11. Cylinder according to any of claims 1 to 10, **characterised in that** the at least one information support (28) comprises an outer face provided with visual information comprising at least one from among: a zone of one or more colours or tints, one or more alphanumeric symbols, the visual information being intended to be exposed or not in the opening (31) according to the position of the at least one support (28).

12. Cylinder according to any of claims 1 to 11, **characterised in that** it comprises a reference wall (30) fixed on the tap (7) and arranged between the tap and the cap (1).

13. Cylinder according to claim 12, **characterised in that** the tap (7) is screwed in a tapped orifice of the cylinder (6) and **in that** the reference wall (30) comprises a portion forming an abutment (33) of vertical positioning of the cap (1) with respect to the tap (7).

14. Cylinder according to claim 12 or 13, **characterised in that** the reference wall (30) comprises a portion located facing the at least one opening (31) forming a window for viewing.

15. Cylinder according to any of claims 1 to 14, **characterised in that** the return member (32) urges and directly acts on the information support (28) to move it to the second position thereof.
